# EUROPEAN PATENT SPECIFICATION

(11) **EP 3 741 078 B1**
(45) Date of publication and mention of the grant of the patent: **31.08.2022**
(21) Application number: 18708113.8
(22) Date of filing: 28.02.2018
(51) Int. Cl.: H04L 9/08

(54) **TRANSMITTER AND RECEIVER FOR TRANSMITTING AND RECEIVING A QUANTUM KEY USING A PILOT SIGNAL**
SENDER UND EMPFÄNGER FÜR KONTINUIERLICHE VARIABLE QUANTENSCHLÜSSELVERTEILUNG
ÉMETTEUR ET RÉCEPTEUR POUR DISTRIBUTION QUANTIQUE DE CLÉS À VARIABLES CONTINUES

(43) Date of publication of application: 25.11.2020
(73) Proprietor: Huawei Technologies Duesseldorf GmbH, 40549 Düsseldorf (DE)
(72) Inventor: HILLERKUSS, David, 80992 Munich (DE); FUNG, Fred, Chi, Hang, 80992 Munich (DE); POPPE, Andreas, 80992 Munich (DE); COMANDAR, Lucian, 80992 Munich (DE)
(74) Representative: Roth, Sebastian
(86) International application number: PCT/EP2018/054939
(87) International publication number: WO 2019/166083

(56) References cited:
- SCHRENK B ET AL: "High-Rate Continuous-Variables Quantum Key Distribution with Piloted-Disciplined Local Oscillator", 2017 EUROPEAN CONFERENCE ON OPTICAL COMMUNICATION (ECOC), IEEE, 17 September 2017 (2017-09-17), pages 1-3, XP033336337, DOI: 10.1109/ECOC.2017.8345964
- "Quantum Key Distribution (QKD); Components and Internal Interfaces", ETSI DRAFT SPECIFICATION; QKD 003, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG QKD Quantum Key Distribution, no. V0.0.3 4 June 2017 (2017-06-04), pages 1-49, XP014303537, Retrieved from the Internet: URL:docbox.etsi.org/ISG/QKD/70-Drafts/0003 ed2/QKD-003ed2v003.pdf [retrieved on 2017-06-04]
- Fabian Laudenbach ET AL: "Pilot-assisted intradyne reception for high-speed continuous-variable quantum key distribution with true local oscillator", Arxiv, 29 December 2017 (2017-12-29), XP055516084, Retrieved from the Internet: URL:https://arxiv.org/pdf/1712.10242v2.pdf [retrieved on 2018-10-16]
- BING QI ET AL: "Generating the Local Oscillator "Locally" in Continuous-Variable Quantum Key Distribution Based on Coherent Detection", PHYSICAL REVIEW X, vol. 5, no. 4, 1 October 2015 (2015-10-01) , XP055316967, DOI: 10.1103/PhysRevX.5.041009
- DANIEL B.?S. SOH ET AL: "Self-Referenced Continuous-Variable Quantum Key Distribution Protocol", PHYSICAL REVIEW X, vol. 5, no. 4, 1 October 2015 (2015-10-01) , XP055316963, DOI: 10.1103/PhysRevX.5.041010

## Description

### TECHNICAL FIELD

The present disclosure relates to a transmitter and a receiver for Continuous Variable (CV) Quantum Key Distribution (QKD). The transmitter and receiver are accordingly configured to exchange a CV-QKD signal, thus they may build a system according to the present disclosure. Further, the present disclosure relates to a transmitting and receiving method for CV-QKD, respectively. In particular, the present disclosure relates to the generation and/or detection of multiple signals of different amplitude with different Signal-to-Noise Ratio (SNR) requirements.

### BACKGROUND

Conventional CV-QKD systems use reference pulses (reference signals) that are transmitted from a transmitter to a receiver for channel impairments estimation. Depending on the degree of freedom, on which these reference signals are sent, either additional complex discrimination and detection equipment is required or large dynamic range Digital to Analog Converters (DACs) and Analog to Digital Converters (ADCs) are required. For example, for single polarization systems the dynamic range of the DAC on the transmitter side has to be large enough to include a large reference signal - usually around 30 dB larger than the CV-QKD signal ("quantum signal"), which also requires a good SNR. Similarly, on the dynamic range of the ADC on the receiver side has to be large enough to measure the reference signal and the quantum signal, which again requires a good SNR. Therefore, large dynamic range DACs and ADCs are typically required, which are unfortunately inexistent at large frequencies.

Furthermore, as the reference signal has looser or equivalent SNR requirements as the quantum signal, conventional implementations make only an inefficient use of available resources.

It is known in the art the following documents

FabianLaudenbach ET AL: "Pilot-assisted intradyne reception for high-speed continuous-variable quantum key distribution with true local oscillator", Arxiv, 29 December 2017, presents a pilot-assisted coherent intradyne reception methodology for CV-QKD with true local oscillator.An optically phase-locked reference tone, prepared using carrier-suppressed optical singlesideband modulation, is multiplexed in polarisation and frequency to the 250 Mbaud quantum signal in order to provide optical frequency- and phase matching between quantum signal and local oscillator. Our concept allows for high symbol rates and can be operated at an extremely low excess-noise level, as validated by experimental measurements.

BING QI ET AL: "Generating the Local Oscillator "Locally" in Continuous-Variable Quantum Key Distribution Based on Coherent Detection",PHYSICAL REVIEW X, vol. 5, no. 4, 1 October 2015 (2015-10-01), proposes and demonstrate a pilot-aided feedforward data recovery scheme that enables reliable coherent detection using a "locally" generated LO. Using two independent commercial laser sources and a spool of 25-km optical fiber, we construct a coherent communication system.The variance of the phase noise introduced by the proposed scheme is measured to be 0.04 (rade), which is small enough to enable secure key distribution. This technology also opens the door for other quantum communication protocols, such as the recently proposed measurement-device-independent CV-QKD, where independent light sources are employed by different users.

Schrenk B ET AL: "High-Rate Continuous-Variables Quantum Key Distribution with Piloted-Disciplined Local Oscillator", 2017 European Conference on Optical Communication (ECOC), IEEE, describes a pilot-disciplined coherent intradyne reception methodology for 250 Mbaud CV-QKD with frequency/phase-matched local oscillator.

ETSI draft specification; QKD 003; European telecommunication standards institute (ETSI), vol. ISG QKD Quantum Key Distribution, no. V0.0.3 4 June 2017 describes Quantum Key Distribution (QKD); components and Internal Interfaces.

Daniel B. S. Soh, ET AL: "Self-Referenced Continuous-Variable Quantum Key Distribution Protocol", PHYSICAL REVIEW X 5, 041010 (2015) describes a continuous-variable quantum key distribution (CV-QKD) protocol, that is a self-referenced CV-QKD.

### SUMMARY

In view of the above-mentioned problems and disadvantages, the present disclosure aims to improve the conventional CV-QKD systems, particularly both the transmitter and the receiver, and corresponding CV-QKD methods. The present disclosure has the object to remove the limitations on the dynamic range that conventional CV-QKD systems have. Since conventionally the dynamic range limitations lead to an inefficient use of resources - because the two signals have distinct amplitude requirements (the reference signal has to be orders or magnitude, usually 30 dB, larger than the quantum signal) and SNR requirements (the quantum signal also requires good SNR) - the present disclosure aims for a more efficient use of resources. This should in particular be achieved with the same equipment, while also satisfying large bandwidth requirements (up to 10s of GHz).

The object of the present disclosure is achieved by the solution provided in the enclosed independent claims. Advantageous implementations of the present disclosure are further defined in the dependent claims.

In particular it is proposed to use an amplitude modification element that modifies the amplitude ratio or difference between the quantum signal and the reference signal. The amplitude modification element has the role of creating the desired amplitude ratio or difference between the signals without modifying their SNR

The present invention is defined by transmitter for CV-QKD according to independent claim 1, receiver for CV-QKD according to independent claim 6, system for CV-QKD according to independent claim 8, transmitting method for CV-QKD according to independent claim 9, and receiving method for CV-QKD according to independent claim 10.

A first aspect provides a transmitter for CV-QKD, the transmitter comprising a signal generation unit configured to generate at least one CV-QKD signal and at least one reference signal having different frequencies and the same amplitude, an amplitude modification element configured to reduce the amplitude of the at least one CV-QKD signal, and a signal transmission unit configured to optically transmit the at least one CV-QKD signal and the at least one reference signal.

In a first implementation of the transmitter, the amplitude modification element may reduce the amplitude of the CV-QKD signal as received from the signal generation unit, and the signal transmission unit may accordingly optically transmit the amplitude-reduced CV-QKD signal. In a second implementation of the transmitter, the signal transmission unit may optically transmit the CV-QKD signal as received from the signal generation unit, and the amplitude modification element may accordingly reduce the amplitude of the CV-QKD signal as received from the signal transmission unit.

In both implementations of the transmitter of the first aspect, due to the amplitude modification element an amplitude ratio or difference between the CV-QKD signal and the reference signal can be created as desired for CV-QKD, while the SNR of the signals does not change. Both signals can be generated such that they have a good SNR, and the CV-QKD signal can then be brought to the quantum level by reducing its amplitude. Accordingly, the transmitter of the first aspect does not depend on the dynamic range requirements of conventional transmitters, and can make better use of available resources.

In an implementation form of the first aspect, the amplitude modification element is configured to reduce the amplitude of the at least one CV-QKD signal in an electrical domain of the transmitter.

This implementation form relates to the first implementation of the transmitter described above, in which the amplitude modification element is arranged for reducing the amplitude of the CV-QKD signal as received from the signal generation unit.

In a further implementation form of the first aspect, the amplitude modification element is configured to reduce the amplitude of the at least one CV-QKD signal in an optical domain of the transmitter.

This implementation form relates to the second implementation of the transmitter described above, in which the amplitude modification element is arranged for reducing the amplitude of the CV-QKD signal as received from the signal transmission unit.

Both of the above implementation forms achieve the technical effect described above, namely that a desired amplitude ratio or difference is created between the transmitted CV-QKD signal and reference signal, while the SNR is not impaired.

In a further implementation form of the first aspect, the amplitude modification element is configured to reduce the amplitude of the at least one CV-QKD signal by an adjustable amount depending on one or more transmission channel parameters.

This makes the use of the transmitter of the first aspect most flexible, in particular allows implementing CV-QKD for different transmission lines and channels with the same transmitter.

In a further implementation form of the first aspect, the signal generation unit includes a DAC configured to generate the at least one CV-QKD signal and the at least one reference signal in an electrical domain of the transmitter, and the optical transmission unit includes an electro-optic modulator configured to convert the at least one CV-QKD signal and the at least one reference signal from the electrical domain into an optical domain of the transmitter.

In a further implementation form of the first aspect, the DAC is configured to use its maximum dynamic range for generating the at least one CV-QKD signal and at least one reference signal in the electrical domain.

The maximum dynamic range of the DAC ensures the best possible SNR for both signals. The SNR of the CV-QKD signal is not changed when its amplitude is reduced by the amplitude modification element.

In a further implementation form of the first aspect, the amplitude of the at least one reference signal is 10-50 dB larger than the amplitude of the at least one CV-QKD signal after amplitude reduction by the amplitude modification element.

In a further implementation form of the first aspect, the amplitude modification element includes a passive attenuator.

This implementation can further simplify the construction of the transmitter of the first aspect.

A second aspect provides a receiver CV-QKD, the receiver comprising a signal receiving unit configured to optically receive at least one CV-QKD signal and at least one reference signal having different frequencies and amplitudes, and an amplitude modification element configured to reduce the amplitude of the at least one reference signal to the amplitude of the at least one CV-QKD signal.

By reducing the amplitude of the reference signal to the amplitude of the CV-QKD signal, the signals can be prepared for sampling that maintains a good SNR for both signals. While the receiver of the second aspect achieves these advantages independently from the type of transmitter that sends the at least one CV-QKD signal and the at least one reference signal, the receiver may, in an advantageous example, work hand in hand with a transmitter of the first aspect, thus allowing for the best SNR for the reference signal and the quantum signal.

In an implementation form of the second aspect, the amplitude modification element is configured to reduce the amplitude of the at least one reference signal in an electrical domain of the receiver.

These two implementation forms both achieve the technical effect described above, namely that the SNR can be improved for both the CV-QKD signal and the reference signal.

In a further implementation form of the second aspect, the signal receiving unit includes a detector, for instance a shot-noise limited balanced detector, configured to convert the at least one CV-QKD signal and the at least one reference signal from an optical domain of the receiver into an electrical-domain of the receiver.

In a further implementation form of the second aspect, the detector includes the amplitude modification element.

This implementation simplifies the construction of the receiver of the second aspect.

A third aspect provides a system for CV-QKD, the system comprising a transmitter according to the first aspect or any of its implementation forms and a receiver according to the second aspect or any of its implementation forms.

The third aspect accordingly achieves the advantages described for the first and second aspect, respectively.

A fourth aspect provides a transmitting method for CV-QKD, the method comprising generating at least one CV-QKD signal and at least one reference signal having different frequencies and the same amplitude, reducing the amplitude of the at least one CV-QKD signal, and optically transmitting the at least one CV-QKD signal and the at least one reference signal.

The steps of the method of the fourth aspect do not necessarily have to be carried out in the above-given order. In particular, the CV-QKD signal may be optically transmitted either after reducing its amplitude or before reducing its amplitude.

In an implementation form of the fourth aspect, the method comprises reducing the amplitude of the at least one CV-QKD signal in an electrical domain.

In a further implementation form of the fourth aspect, the method comprises reducing the amplitude of the at least one CV-QKD signal in an optical domain.

In a further implementation form of the fourth aspect, the method comprises reducing the amplitude of the at least one CV-QKD signal by an adjustable amount depending on one or more transmission channel parameters.

In a further implementation form of the fourth aspect, the method comprises generating the at least one CV-QKD signal and the at least one reference signal in an electrical domain, and converting the at least one CV-QKD signal and the at least one reference signal from the electrical domain into an optical domain.

In a further implementation form of the fourth aspect, the method comprises using a maximum dynamic range of a DAC for generating the at least one CV-QKD signal and at least one reference signal in the electrical domain.

In a further implementation form of the fourth aspect, the amplitude of the at least one reference signal is 10-50 dB larger than the amplitude of the at least one CV-QKD signal after amplitude reduction.

The method of the fourth aspect and its implementation forms achieve the same advantages as the transmitter of the first aspect and its respective implementation forms.

A fifth aspect provides a receiving method for CV-QKD, the method comprising optically receiving at least one CV-QKD signal and at least one reference signal having different frequencies and amplitudes, and reducing the amplitude of the at least one reference signal to the amplitude of the at least one CV-QKD signal.

In an implementation form of the fifth aspect, the method comprises reducing the amplitude of the at least one reference signal in an electrical domain.

In a further implementation form of the second aspect, the method comprises converting the at least one CV-QKD signal and the at least one reference signal from an optical domain into an electrical-domain.

The method of the fifth aspect and its implementation forms achieve the same advantages as the receiver of the second aspect and its respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- FIG. 1: shows two implementations (a) and (b) of a transmitter according to an embodiment.
- FIG. 2: shows a transmitter according to an embodiment.
- FIG. 3: shows a transmitter according to an embodiment.
- FIG. 4: shows a receiver according to an embodiment.
- FIG. 5: shows a receiver according to an embodiment.
- FIG. 6: shows a system according to an embodiment.
- FIG. 7: shows a method according to an embodiment.
- FIG. 8: shows a method according to an embodiment.

### DETAILED DESCRIPTION OF EMBODIMENTS

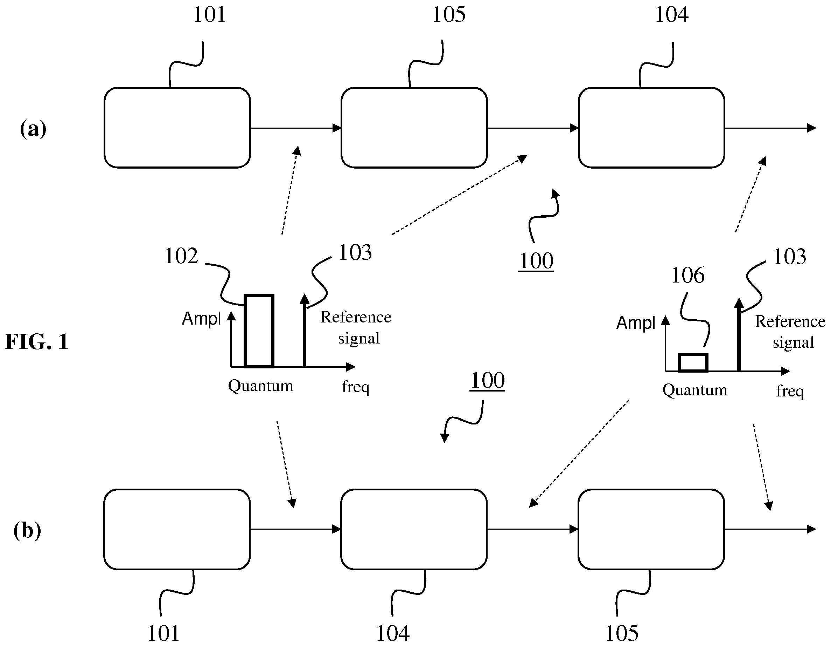

FIG. 1 shows an implementation (a) and an implementation (b), respectively, of a transmitter 100 according to an embodiment. The transmitter 100 is configured to perform QKD, for instance with a receiver for QKD detailed further below. The transmitter 100 comprises a signal generation unit 101, an amplitude modification element 104, and a signal transmission unit 105.

The signal generation unit 101 is configured to generate at least one CV-QKD signal 102 and at least one reference signal 103, which have different frequencies and the same amplitude - as shown in the left-hand diagram. In the implementation (a) the signal generation unit 101 provides the CV-QKD signal 102 and reference signal 103 of the same amplitude to the signal transmission unit 105. In the implementation (b) the signal generation unit 101 provides the CV-QKD signal 102 and reference signal 103 of the same amplitude to the amplitude modification element 104.

The amplitude modification element 104 is configured to reduce the amplitude of the at least one CV-QKD signal 102 to produce an amplitude-reduced CV-QKD signal 106. Thereby, the amplitude modification element 104 may set a determined ratio or difference between the amplitude of the reference signal 103 and the amplitude of the amplitude-reduced CV-QKD signal 106. For instance, the amplitude modification element 104 may not, or at least not significantly, reduce the amplitude of the reference signal 103. In other words, the amplitude modification element 104 may be transparent for the reference signal 103. For instance, the amplitude modification element 104 may be or include a frequency-selective (wavelength-selective) filter element, which acts only on the frequency (wavelength) of the CV-QKD signal 102. However, the amplitude modification element 104 may further include a passive attenuator that reduces the amplitude of both signals, i.e. does not change the absolute amplitude difference between the two signals 106, 103. In the implementation (a) the amplitude-reduced CV-QKD signal 106 and the reference signal 103 are output from the transmitter 100, e.g. onto a transmission line like an optical fibre. In the implementation (b) the amplitude-reduced CV-QKD signal 106 and the reference signal 103 are provided from the amplitude modification element 104 to the signal transmission unit 105.

The signal transmission unit 105 is configured to optically transmit the at least one CV-QKD signal 102 (in the implementation (a)) or the amplitude-reduced CV-QKD signal 106 (in the implementation (b)) and the at least one reference signal 103. As shown in the right-hand diagram of FIG. 1, the amplitude-reduced CV-QKD signal 106 and the reference signal 103 have different frequencies and amplitudes. The amplitude of the at least one reference signal 103 may be 10-50 dB, for example 20-40 dB, larger than the amplitude of the at least one amplitude-reduced CV-QKD signal 106.

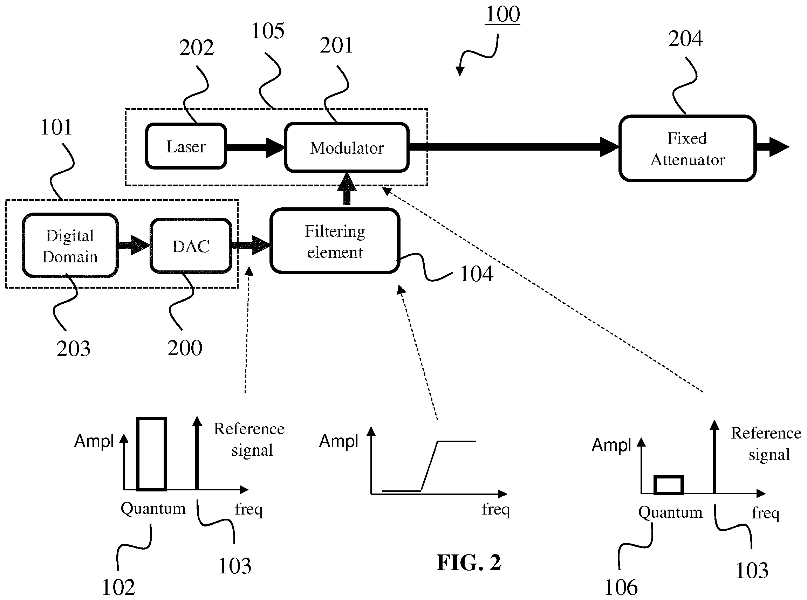

FIG. 2 shows a transmitter 100, which builds on the implementation (b) of the transmitter 100 shown in FIG. 1. Same elements in FIG. 1 and FIG. 2 are provided with the same reference signs and function likewise. Accordingly, also the transmitter 100 of FIG. 2 includes the signal generation unit 101, the amplitude modification element 104, and the signal transmission unit 105.

In particular, in the example of the transmitter 100 of FIG. 2 the amplitude modification element 104 is provided in the electrical domain of the transmitter 100, and is thus configured to reduce the amplitude of the at least one CV-QKD signal 102 in the electrical domain of the transmitter 100. In this example, the signal generation unit 101 includes a digital domain 203 and a DAC 200, and the signal transmission unit 105 includes a laser 202, a modulator 201 and optionally a fixed attenuator 204. The amplitude modification element 104 is provided between the signal generation unit 101 and the signal transmission unit 105.

A practical useable frequency response of the amplitude modification element 104 may be similar to that of a high-pass filter, as shown in the middle diagram of FIG. 2. Thus, the two signals 102, 103 are subject to different attenuation coefficients (higher for the CV-QKD signal 102 and lower for the reference signal 103). This results in the two signals 106, 103 to have different amplitudes after attenuation, while they maintain the same high SNR (with respect to the DAC quantization noise) as before the attenuation. The two signals 106, 103 may then be likewise attenuated to the required optical power using the fixed attenuator 204. The amplitude modification element 104 can also include a fixed attenuator instead of the attenuator 204 for further simplifying the scheme or can include an additional attenuator.

The transmitter 100 may particularly use as the laser 202 a continuous wave laser to encode the amplitude-reduced CV-QKD signal 106 and the reference signal 103, which thus in this example already have different amplitudes. During a transmission period, the electro-optical modulator 201 is configured to encode data originating from the digital domain 203 onto the continuous wave of the laser 202. The CV-QKD signal 102 and the reference signal 103 may be generated in the signal generation unit 101 with different frequencies and same amplitudes by advantageously using a high portion of the amplitude dynamic range, for instance the maximum amplitude dynamic range, of the DAC 200 for both the CV-QKD 102 and the reference signal 103. In other words, the DAC 200 may be configured to use its maximum dynamic range for generating the at least one CV-QKD signal 102 and the at least one reference signal 103 in the electrical domain. This will result in both signals 102, 103 to have a similar or pre-defined signal to DAC quantization noise ratio. The output of the DAC 200 is then amplitude-reduced by the amplitude modification element 104 before the electro-optical modulator 201, which modulates the amplitude-reduced CV-QKD signal 106 and the reference signal 103 at different frequencies. The amplitude modification element 104 may be thereby matched to the output of the DAC 200, such that their convoluted frequency response matches that of the desired quantum-signal ratio in terms of amplitude. This allows using a DAC with a small dynamic range, i.e. which requires for instance 2 bits for modulating a CV-QKD signal using QPSK of less than 10 bits for performing a Gaussian modulation of the CV-QKD signal.

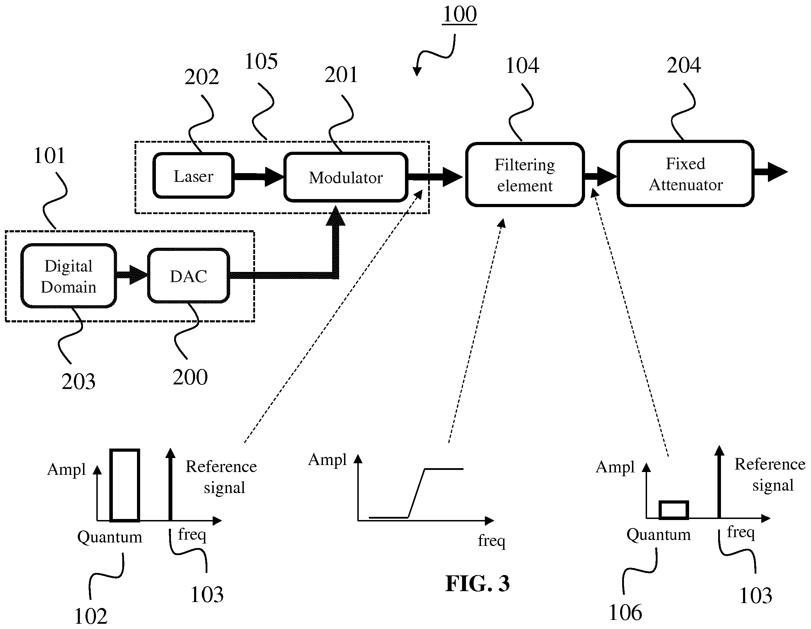

FIG. 3 shows a transmitter 100, which builds on the implementation (a) of the transmitter 100 shown in FIG. 1 and shares elements with the transmitter 200 of FIG. 2. Same elements in FIG. 1 or 2 and in FIG. 3 are provided with the same reference signs and function likewise. Accordingly, also the transmitter 100 of FIG. 3 includes the signal generation unit 101, the amplitude modification element 104, and the signal transmission unit 105.

In contrast to the transmitter 100 shown in FIG. 2, in the example of the transmitter 100 shown in FIG. 3 the amplitude modification element 104 is provided in the optical domain of the transmitter 100, and is thus configured to reduce the amplitude of the at least one CV-QKD signal 102 in the optical domain of the transmitter 100. In this example, the signal generation unit 101 includes again a digital domain 203 and a DAC 200. The signal transmission unit 105 includes again a laser 202 and a modulator 201, and optionally a fixed attenuator, and is in this example provided directly after the signal generation unit 101. The amplitude modification element 104 is provided directly after the signal transmission unit 105. Optionally, a fixed attenuator 204 is provided after the amplitude modification element 104. However, the fixed attenuator 204 can also be integrated into the amplitude modification element 104 or into the signal transmission unit 105.

As shown by the middle diagram of FIG. 3, as in FIG. 2, the amplitude modification element 104 may have a frequency response that is similar to that of a high-pass filter. Again, the amplitude modification element 104 may reduce the amplitude of the CV-QKD signal 102 such that a determined ratio or difference is set between the amplitude of the amplitude-reduced CV-QKD signal 106 and the amplitude of the reference signal 103. The amplitude modification element 104 may also be configured to reduce the amplitude of the at least one CV-QKD signal 102 by an adjustable amount, which depends on one or more transmission channel parameters (this is also possible for the transmitter 100 of FIG. 2). The amplitude modification element 104 is in the case of FIG. 3 provided directly after the electro-optical modulator 201. The DAC 200 thus provides the modulator 201 directly with the converted analog signal. The transmitter 100 may again use as the laser 202 a continuous wave laser to encode the CV-QKD signal 102 and the reference signal 103, which in this example still have the same amplitude. In the signal generation unit 101, the DAC 200 may use again a high portion of the amplitude dynamic range, for instance the maximum amplitude dynamic range, of the DAC 200 for generating the at least one CV-QKD signal 102 and the at least one reference signal 103 in the electrical domain.

Notably, in CV-QKD there are 2 general types of modulation for the quantum signal: Quadrature Phase Shift Keying (QPSK) and Gaussian. For the former signal type, 4 points are modulated in the amplitude and phase space, whereas for the latter signal type a Gaussian profile is modulated in amplitude and phase. When using a single DAC 200 to modulate the CV-QKD signal 102 and the reference signal 103 (which is for instance orders of magnitude higher than the quantum signal 102), the required number of bits for a conventional transmitter is shown in the table below (in the column labelled 'Standard').

| **Modulation** | **Number of required bits for quantum signal (transmitter side)** | |
|---|---|---|
| | **Standard** | **Present Embodiments** |
| **QPSK** | **~9 bits** | **2 bits** |
| **Gaussian** | **16 bits** | **<10 bits** |

In comparison, when using a transmitter 100 as shown in one of the FIGs. 1-3 (in the column labelled 'Present Embodiments'), the required modulation bits are reduced to that required by the signal with the most stringent SNR (in the present case the modulation format of the quantum signal). This reduces the ADC required dynamic range, and allows for the use of higher speed ADCs.

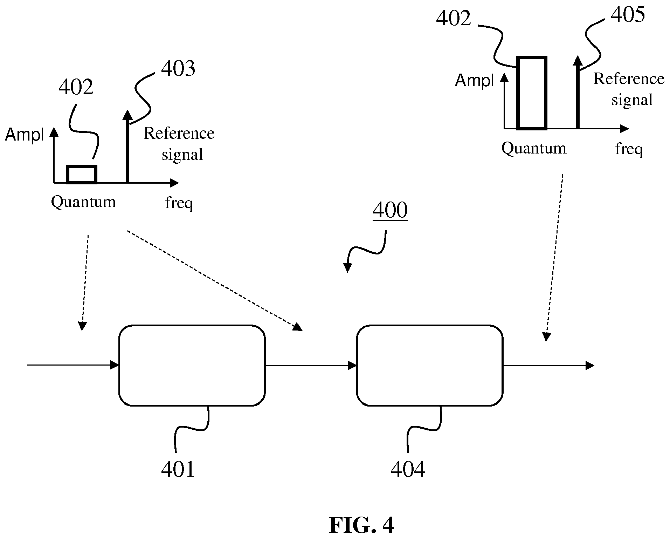

FIG. 4 shows a receiver 400 according to an embodiment. The receiver 400 is configured to perform QKD, for instance with a transmitter 100 for QKD. The receiver 400 comprises a signal receiving unit 401, and an amplitude modification element 404.

The signal receiving unit 401 is configured to optically receive at least one CV-QKD signal 402 and at least one reference signal 403, the signals having different frequencies and amplitudes - as shown in the left-hand diagram. The CV-QKD signal 402 may thereby be the CV-QKD-signal 102 sent by the transmitter 100. That is, the receiver 400 may receive the CV-QKD signal 402 from a transmitter 100. The same is true for the reference signal 403, which may be the reference signal 103 sent by the transmitter 100. The signal receiving unit 401 provides the CV-QKD signal 402 and the reference signal 403 to the amplitude modification element 404.

The amplitude modification element 404 is configured to reduce the amplitude of the at least one reference signal 403 to the amplitude of the at least one CV-QKD signal 402. That is, as shown in the right-hand diagram of FIG. 4, the CV-QKD signal 402 and the reference signal 403 may now have different frequencies but the same amplitudes. Depending on detector noise, in some situations, the amplitude for the reference signal 403 might be different than that of the CV-QKD signal 402. The amplitude modification element 404 is thereby either configured to reduce the amplitude of the at least one reference signal 403 in an electrical domain of the receiver 400.

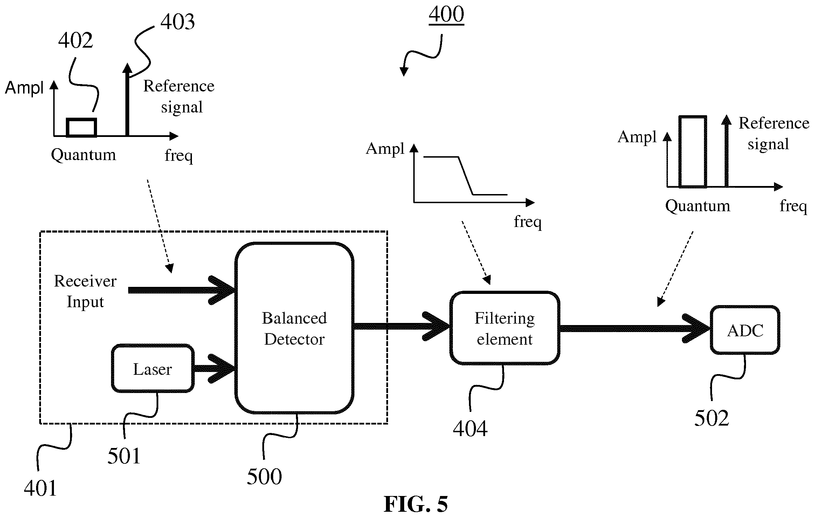

FIG. 5 shows a receiver 400, which builds on the receiver 400 of FIG. 4. Same elements in FIG. 4 and FIG. 5 are provided with the same reference signs and function likewise. Accordingly, also the receiver 400 of FIG. 5 includes the signal receiving unit 401, and the amplitude modification element 404. The signal receiving unit 401 may include a laser 501 and a detector 500, such as a balanced detector 500 as shown in FIG. 5.

The balanced detector 500, which is for instance a shot-noise limited balanced detector, is configured to detect a receiver input and down-converts the encoded signals (the CV-QKD signal 402 and reference signal 403) to the electrical bandwidth of the detector using particularly a local continuous wave laser 501. It should be noted that in some CV-QKD implementations the electrical shot noise is the dominant noise source but in this disclosure it has been omitted for clarity. However, this (shot noise) may be taken into account in the security analysis, and other noise sources (usually labeled excess noise) may determine the achievable performance. This excess noise may also include the quantization noise for both the quantum signal 402 and the reference signal 402.

Prior to being sampled by an ADC 502, the amplitude modification signal 404 is used to modify the amplitude ratio or difference between the quantum signal 102 and the reference signal 403. The amplitude modification element 404 may be a filtering element, and is in the electrical domain. The amplitude modification element 404 introduces negligible to zero losses to the quantum signal 402. The amplitude modification element 404 may be adjusted such that at its output the amplitude of the two signals 402, 403 is configured to accommodate for the Signal-to-Quantization Noise of the two signals 402, 403 after the ADC 502. For instance, the amplitude modification element 404 can be or include a lowpass filter that attenuates the reference signal 403 amplitude to be the same (as shown in the right-hand diagram) or different than the quantum signal 402 signal, depending e.g. on SNR requirements. Furthermore, the amplitude modification element 404 can be incorporated in the balanced detector 500 to achieve a simple and compact receiver 400.

The receiver 400 allows significantly better allocating the dynamic range of the ADC 502 to the incoming signals depending on the SNR requirements.

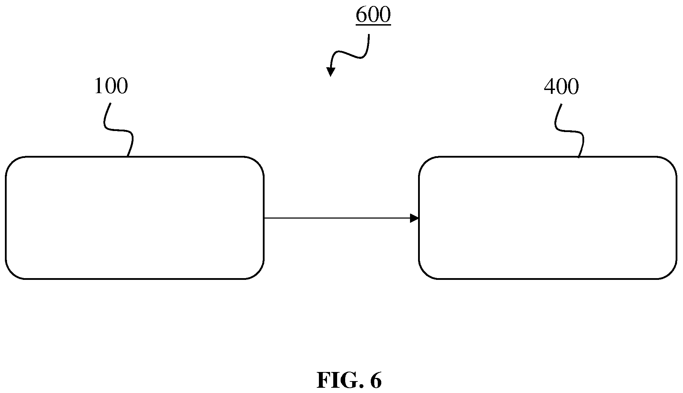

FIG. 6 shows a system 600 according to an embodiment. The system 600 is configured to perform CV-QKD, and to this end comprises a QKD transmitter 100 as shown in FIG. 1, 2 or 3, and a QKD receiver 400 as shown in FIG. 4 or FIG. 5.

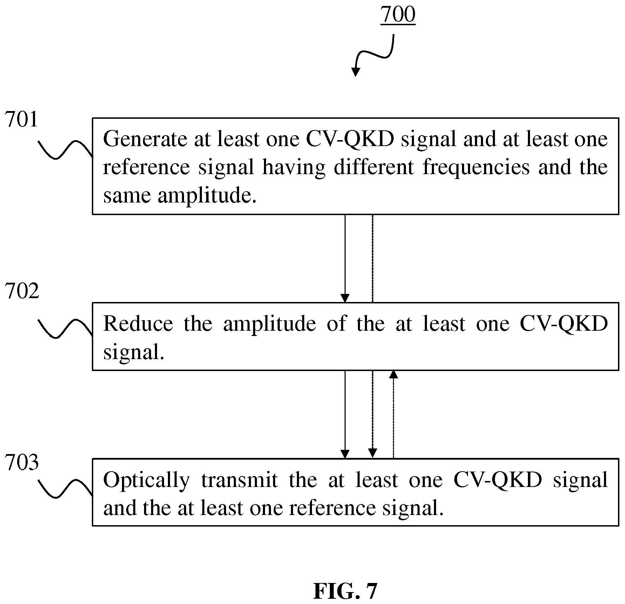

FIG. 7 shows a transmitting method 700 for CV-QKD. The method 700 may be carried out by a transmitter 100, as shown e.g. in FIG. 1, 2 or 3. The method 700 comprises a step 701 of generating at least one CV-QKD signal 102 and at least one reference signal 103 having different frequencies and the same amplitude. This step 701 may be implemented by the signal generation unit 101. Further, it comprises a step 702 of reducing the amplitude of the at least one CV-QKD signal 102. This step 702 may be implemented by the amplitude modification element 104. Further, the method 700 comprises a step 703 of optically transmitting the at least one CV-QKD signal 102 or the at least one amplitude-reduced CV-QKD signal 106 and the at least one reference signal 103. This step 703 may be implemented by the signal transmission unit 105. As shown by the solid arrows and the broken arrows, respectively, the method 700 may either carry out first the step 701, then the step 702 and then the step 703, or may carry out first the step 701, then the step 703, and then the step 702.

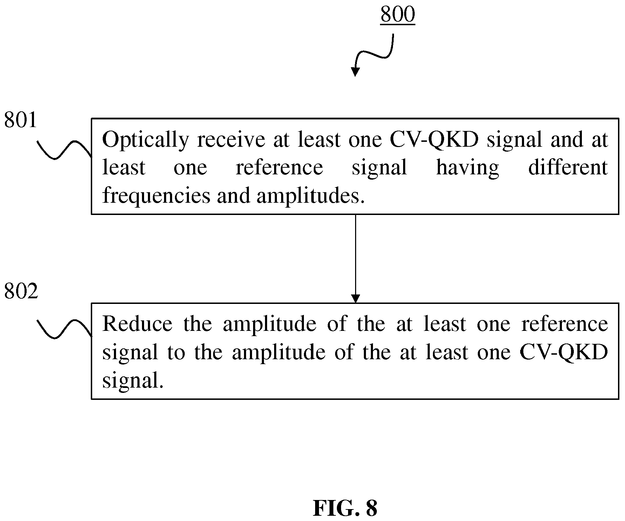

FIG. 8 shows a receiving method 800 for CV-QKD. The method 800 may be carried out by a receiver 400 as shown e.g. in FIG. 4 or 5. The method 800 comprises a step 801 of optically receiving 801 at least one CV-QKD signal 402 and at least one reference signal 403 having different frequencies and amplitudes. This step 801 may be implemented by the signal receiving unit 401. The method also comprises a step 802 of reducing the amplitude of the at least one reference signal 403 to the amplitude of the at least one CV-QKD signal 402. This step 802 may be implemented by the amplitude modification element 404.

The present disclosure has been described in conjunction with various embodiments as examples as well as implementations. However, other variations can be understood and effected by those persons skilled in the art and practicing the claimed disclosure, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Transmitter (100) for Continuous Variable Quantum Key Distribution, CV-QKD, the transmitter (100) comprising
a signal generation unit (101) configured to generate at least one CV-QKD signal (102) and at least one reference signal (103) having different frequencies and the same amplitude, wherein the signal generation unit (101) includes a digital-to-analog converter, DAC, (200) configured to generate the at least one CV-QKD signal (102) and the at least one reference signal (103) in an electrical domain of the transmitter (100),
an amplitude modification element (104) configured to reduce the amplitude of the at least one CV-QKD signal (102), wherein the amplitude modification element (104) is configured to reduce the amplitude of the at least one CV-QKD signal (102) in the electrical domain of the transmitter (100), and
a signal transmission unit (105) configured to optically transmit the at least one CV-QKD signal (102, 106) and the at least one reference signal (103), wherein the optical transmission unit (105) includes an electro-optic modulator (201) configured to convert the at least one CV-QKD signal (102, 106) and the at least one reference signal (103) from the electrical domain into an optical domain of the transmitter (100).

2. Transmitter (100) according to claim 1, wherein
the amplitude modification element (104) is configured to reduce the amplitude of the at least one CV-QKD signal (102) by an adjustable amount depending on one or more transmission channel parameters.

3. Transmitter (100) according to claim 1 or 2, wherein
the DAC (201) is configured to use its maximum dynamic range for generating the at least one CV-QKD signal (102) and at least one reference signal (103) in the electrical domain.

4. Transmitter (100) according to one of the claims 1 to 3, wherein
the amplitude of the at least one reference signal (103) is 10-50 dB larger than the amplitude of the at least one CV-QKD signal (106) after amplitude reduction by the amplitude modification element (104).

5. Transmitter (100) according to one of the claims 1 to 4, wherein
the amplitude modification element (104) includes a passive attenuator.

6. Receiver (400) for Continuous-Variable Quantum Key Distribution, CV-QKD, the receiver (400) comprising
a signal receiving unit (401) configured to optically receive at least one CV-QKD signal (402) and at least one reference signal said signals having been generated by the transmitter of claim 1 (403) having different frequencies and amplitudes, wherein the signal receiving unit (401) includes a detector (500), preferably a balanced detector, configured to convert the at least one CV-QKD signal (402) and the at least one reference signal (403) from an optical domain of the receiver (400) into an electrical-domain of the receiver (400), and
an amplitude modification element (404) configured to reduce the amplitude of the at least one reference signal (403) to the amplitude of the at least one CV-QKD signal (402), wherein the amplitude modification element (404) is configured to reduce the amplitude of the at least one reference signal (403) in an electrical domain of the receiver (400).

7. Receiver (400) according to claim 6, wherein
the detector (500) includes the amplitude modification element (404).

8. System (600) for Continuous-Variable Quantum Key Distribution, CV-QKD, the system (600) comprising a transmitter (100) according to one of the claims 1 to 5 and a receiver (400) according to one of the claims 6 to 7.

9. Transmitting method (700) for Continuous-Variable Quantum Key Distribution, CV-QKD, the method (700) comprising
generating by a signal generation unit which includes a digital-to-analog converter, DAC, (701) at least one CV-QKD signal (102) and at least one reference signal (103) having different frequencies and the same amplitude, wherein the at least one CV-QKD signal (102) and the at least one reference signal (103) are generated in an electrical domain of the transmitter (100),
reducing by an amplitude modification element (702) the amplitude of the at least one CV-QKD signal (102), wherein the amplitude of the at least one CV-QKD signal (102) is reduced in the electrical domain of the transmitter (100), and
optically transmitting by a signal transmission unit (703) the at least one CV-QKD signal (102, 106) and the at least one reference signal (103), wherein the at least one CV-QKD signal (102, 106) and the at least one reference signal (103) are converted from the electrical domain into an optical domain of the transmitter (100).

10. Receiving method (800) for Continuous-Variable Quantum Key Distribution, CV-QKD, the method (800) comprising
optically receiving (801) at least one CV-QKD signal (402) and at least one reference signal said signals having been generated in accordance with the method of claim 9 and (403) having different frequencies and amplitudes, wherein the at least one CV-QKD signal (402) and the at least one reference signal (403) are converted from an optical domain of the receiver (400) into an electrical-domain of the receiver (400), and
reducing (802) the amplitude of the at least one reference signal (403) to the amplitude of the at least one CV-QKD signal (402), wherein the amplitude of the at least one reference signal (403) is reduced in an electrical domain of the receiver (400).

## Patentansprüche

1. Sender (100) für kontinuierliche variable Quantenschlüsselverteilung, Continuous Variable Quantum Key Distribution (CV-QKD), wobei der Sender (100)
eine Signalerzeugungseinheit (101), die so konfiguriert ist, dass sie mindestens ein CV-QKD-Signal (102) und mindestens ein Referenzsignal (103) erzeugt, die unterschiedliche Frequenzen und dieselbe Amplitude aufweisen, wobei die Signalerzeugungseinheit (101) ein Digital-Analog-Wandler, digital-to-analog converter (DAC), (200) enthält, der so konfiguriert ist, dass er das mindestens eine CV-QKD-Signal (102) und das mindestens eine Referenzsignal (103) in einem elektrischen Bereich des Senders (100) erzeugt,
ein Amplitudenmodifikationselement (104), das so konfiguriert ist, dass es die Amplitude des mindestens einen CV-QKD-Signals (102) verringert, wobei das Amplitudenmodifikationselement (104) so konfiguriert ist, dass es die Amplitude des mindestens einen CV-QKD-Signals (102) in dem elektrischen Bereich des Senders (100) verringert, und
eine Signalübertragungseinheit (105), die so konfiguriert ist, dass sie das mindestens eine CV-QKD-Signal (102, 106) und das mindestens eine Referenzsignal (103) optisch überträgt, wobei die optische Übertragungseinheit (105) einen elektrooptischen Modulator (201) enthält, der so konfiguriert ist, dass er das mindestens eine CV-QKD-Signal (102, 106) und das mindestens eine Referenzsignals (103) aus dem elektrischen Bereich in einen optischen Bereich des Senders (100) umwandelt, umfasst.

2. Sender (100) nach Anspruch 1, wobei
das Amplitudenmodifikationselement (104) so konfiguriert ist, dass es die Amplitude des mindestens einen CV-QKD-Signals (102) in Abhängigkeit von einem oder mehreren Übertragungskanalparametern um einen einstellbaren Betrag verringert.

3. Sender (100) nach Anspruch 1 oder 2, wobei
der DAC (201) so konfiguriert ist, dass er seinen maximalen dynamischen Bereich zum Erzeugen des mindestens einen CV-QKD-Signals (102) und mindestens eines Referenzsignals (103) in dem elektrischen Bereich verwendet.

4. Sender (100) nach einem der Ansprüche 1 bis 3, wobei
die Amplitude des mindestens einen Referenzsignals (103) um 10 bis 50 dB größer als die Amplitude des mindestens einen CV-QKD-Signals (106) nach der Amplitudenverringerung durch das Amplitudenmodifikationselement (104) ist.

5. Sender (100) nach einem der Ansprüche 1 bis 4, wobei
das Amplitudenmodifikationselement (104) ein passives Dämpfungsglied enthält.

6. Empfänger (400) für kontinuierliche variable Quantenschlüsselverteilung, CV-QKD, wobei der Empfänger (400)
eine Signalempfangseinheit (401), die so konfiguriert ist, dass sie mindestens ein CV-QKD-Signal (402) und mindestens ein Referenzsignal optisch empfängt, wobei die Signale durch den Sender nach Anspruch 1 (403) erzeugt wurden und unterschiedliche Frequenzen und
Amplituden aufweisen, wobei die Signalempfangseinheit (401) einen Detektor (500) enthält, vorzugsweise einen symmetrischen Detektor, der so konfiguriert ist, dass er das mindestens eine CV-QKD-Signal (402) und das mindestens eine Referenzsignal (403) aus einem optischen Bereich des Empfängers (400) in einen elektrischen Bereich des Empfängers (400) umwandelt, und
ein Amplitudenmodifikationselement (404), das so konfiguriert ist, dass es die Amplitude des mindestens einen Referenzsignals (403) auf die Amplitude des mindestens einen CV-QKD-Signals (402) verringert, wobei das Amplitudenmodifikationselement (404) so konfiguriert ist, dass es die Amplitude des mindestens einen Referenzsignals (403) in einem elektrischen Bereich des Empfängers (400) verringert, umfasst.

7. Empfänger (400) nach Anspruch 6, wobei
der Detektor (500) das Amplitudenmodifikationselement (404) enthält.

8. System (600) für kontinuierliche variable Quantenschlüsselverteilung, CV-QKD, wobei das System (600) einen Sender (100) nach einem der Ansprüche 1 bis 5 und einen Empfänger (400) nach einem der Ansprüche 6 bis 7 umfasst.

9. Übertragungsverfahren (700) für kontinuierliche variable Quantenschlüsselverteilung, CV-QKD, wobei das Verfahren (700)
Erzeugen durch eine Signalerzeugungseinheit, die einen Digital-Analog-Wandler, DAC, (701) enthält, mindestens eines CV-QKD-Signals (102) und mindestens eines Referenzsignals (103), die unterschiedliche Frequenzen und dieselben Amplitude aufweisen, wobei das mindestens ein CV-QKD-Signal (102) und das mindestens eine Referenzsignal (103) in einem elektrischen Bereich des Senders (100) erzeugt werden,
Verringern der Amplitude des mindestens einen CV-QKD-Signals (102) durch ein Amplitudenmodifikationselement (702), wobei die Amplitude des mindestens einen CV-QKD-Signals (102) in dem elektrischen Bereich des Senders (100) verringert wird, und
optisches Übertragen des mindestens einen CV-QKD-Signals (102, 106) und des mindestens einen Referenzsignals (103) durch eine Signalübertragungseinheit (703), wobei das mindestens eine CV-QKD-Signal (102, 106) und das mindestens eine Referenzsignal (103) aus dem elektrischen Bereich in einen optischen Bereich des Senders (100) umgewandelt werden, umfasst.

10. Empfangsverfahren (800) für kontinuierliche variable Quantenschlüsselverteilung, CV-QKD, wobei das Verfahren (800)
optisches Empfangen (801) mindestens eines CV-QKD-Signals (402) und mindestens eines Referenzsignals, wobei die Signale gemäß dem Verfahren nach Anspruch 9 erzeugt wurden und
unterschiedliche Frequenzen und Amplituden aufweisen, wobei das mindestens eine CV-QKD-Signal (402) und das mindestens eine Referenzsignal (403) aus einen optischen Bereich des Empfängers (400) in einen elektrischen Bereich des Empfängers (400) umgewandelt werden, und
Verringern (802) der Amplitude des mindestens einen Referenzsignals (403) auf die Amplitude des mindestens einen CV-QKD-Signals (402), wobei die Amplitude des mindestens einen Referenzsignals (403) in einem elektrischen Bereich des Empfängers (400) verringert wird, umfasst.

## Revendications

1. Émetteur (100) pour distribution de clé quantique à variable continue, CV-QKD, l'émetteur (100) comprenant
une unité de génération de signal (101) configurée pour générer au moins un signal CV-QKD (102) et au moins un signal de référence (103) ayant des fréquences différentes et la même amplitude, dans lequel l'unité de génération de signal (101) comporte un convertisseur numérique-analogique, DAC, (200) configuré pour générer l'au moins un signal CV-QKD (102) et l'au moins un signal de référence (103) dans un domaine électrique de l'émetteur (100),
un élément de modification d'amplitude (104) configuré pour réduire l'amplitude de l'au moins un signal CV-QKD (102), dans lequel l'élément de modification d'amplitude (104) est configuré pour réduire l'amplitude de l'au moins un signal CV-QKD (102) dans le domaine électrique de l'émetteur (100), et
une unité de transmission de signal (105) configurée pour transmettre optiquement l'au moins un signal CV-QKD (102, 106) et l'au moins un signal de référence (103), dans lequel l'unité de transmission optique (105) comporte un modulateur électro-optique (201) configuré pour convertir l'au moins un signal CV-QKD (102, 106) et l'au moins un signal de référence (103) du domaine électrique en un domaine optique de l'émetteur (100).

2. Émetteur (100) selon la revendication 1, dans lequel
l'élément de modification d'amplitude (104) est configuré pour réduire l'amplitude de l'au moins un signal CV-QKD (102) d'une quantité réglable en fonction d'un ou de plusieurs paramètres de canal de transmission.

3. Émetteur (100) selon la revendication 1 ou 2, dans lequel
le DAC (201) est configuré pour utiliser sa plage dynamique maximale pour générer l'au moins un signal CV-QKD (102) et au moins un signal de référence (103) dans le domaine électrique.

4. Émetteur (100) selon l'une quelconque des revendications 1 à 3, dans lequel
l'amplitude de l'au moins un signal de référence (103) est supérieure de 10 à 50 dB à l'amplitude de l'au moins un signal CV-QKD (106) après réduction d'amplitude par l'élément de modification d'amplitude (104).

5. Émetteur (100) selon l'une quelconque des revendications 1 à 4, dans lequel
l'élément de modification d'amplitude (104) comporte un atténuateur passif.

6. Récepteur (400) pour distribution de clé quantique à variable continue, CV-QKD, le récepteur (400) comprenant
une unité de réception de signal (401) configurée pour recevoir optiquement au moins un signal CV-QKD (402) et au moins un signal de référence, lesdits signaux ayant été générés par l'émetteur selon la revendication 1 (403) ayant des fréquences et des amplitudes différentes,
dans lequel l'unité de réception de signal (401) comporte un détecteur (500), de préférence un détecteur équilibré, configuré pour convertir l'au moins un signal CV-QKD (402) et l'au moins un signal de référence (403) à partir d'un domaine optique du récepteur (400) dans un domaine électrique du récepteur (400), et
un élément de modification d'amplitude (404) configuré pour réduire l'amplitude de l'au moins un signal de référence (403) à l'amplitude de l'au moins un signal CV-QKD (402), dans lequel l'élément de modification d'amplitude (404) est configuré pour réduire l'amplitude de l'au moins un signal de référence (403) dans un domaine électrique du récepteur (400).

7. Récepteur (400) selon la revendication 6, dans lequel
le détecteur (500) comporte l'élément de modification d'amplitude (404).

8. Système (600) pour distribution de clé quantique à variable continue, CV-QKD, le système (600) comprenant un émetteur (100) selon l'une des revendications 1 à 5 et un récepteur (400) selon l'une des revendications 6 et 7.

9. Procédé de transmission (700) pour distribution de clé quantique à variable continue, CV-QKD, le procédé (700) comprenant
la génération par une unité de génération de signal qui comporte un convertisseur numérique-analogique, DAC, (701) d'au moins un signal CV-QKD (102) et d'au moins un signal de référence (103) ayant des fréquences différentes et la même amplitude, dans lequel l'au moins un signal CV-QKD (102) et l'au moins un signal de référence (103) sont générés dans un domaine électrique de l'émetteur (100),
la réduction par un élément de modification d'amplitude (702) de l'amplitude de l'au moins un signal CV-QKD (102), dans lequel l'amplitude de l'au moins un signal CV-QKD (102) est réduite dans le domaine électrique de l'émetteur (100), et
la transmission optique par une unité de transmission de signal (703) de l'au moins un signal CV-QKD (102, 106) et l'au moins un signal de référence (103), dans lequel l'au moins un signal CV-QKD (102, 106) et l'au moins un signal de référence (103) sont convertis du domaine électrique en un domaine optique de l'émetteur (100).

10. Procédé de réception (800) pour distribution de clé quantique à variable continue, CV-QKD, le procédé (800) comprenant
la réception (801) optique d'au moins un signal CV-QKD (402) et d'au moins un signal de référence, lesdits signaux ayant été générés conformément au procédé de la revendication 9 et (403) ayant des fréquences et des amplitudes différentes, dans lequel l'au moins un signal CV-QKD (402) et l'au moins un signal de référence (403) sont convertis d'un domaine optique du récepteur (400) en un domaine électrique du récepteur (400), et
la réduction (802) de l'amplitude de l'au moins un signal de référence (403) à l'amplitude de l'au moins un signal CV-QKD (402), dans lequel l'amplitude de l'au moins un signal de référence (403) est réduite dans un domaine électrique du récepteur (400).
